# EUROPEAN PATENT SPECIFICATION

(11) **EP 1 747 052 B1**
(45) Date of publication and mention of the grant of the patent: **03.10.2018**
(21) Application number: 05737781.4
(22) Date of filing: 09.05.2005
(51) Int. Cl.: B01D 5/00, F28B 1/02, F28D 7/02, F28F 21/08

(54) **VAPOR CONDENSER FOR LABORATORY EQUIPMENT**
DAMPFKONDENSATOR FÜR LABORGERÄTE
CONDENSEUR DE VAPEUR POUR EQUIPEMENT DE LABORATOIRE

(30) Priority: 13.05.2004 IT MI20040221 U
(43) Date of publication of application: 31.01.2007
(73) Proprietor: Passoni, Giovanni, 23871 Lomagna (LC) (IT)
(72) Inventor: Passoni, Giovanni, 23871 Lomagna (LC) (IT)
(74) Representative: Lampis, Marco
(86) International application number: PCT/EP2005/004979
(87) International publication number: WO 2005/113100

(56) References cited:
- WO-A-99/67584
- DE-A1- 1 551 527
- GB-A- 634 917
- US-A- 3 834 448
- US-A- 5 487 423
- US-A1- 2003 217 565
- US-B1- 6 293 335

## Description

This invention relates to an innovative vapor condenser for use in laboratory equipment such as automatic or manual distillers requiring condensation of vapors into vapor current for example for determination of ammoniacal nitrogen, proteinous nitrogen, nitric nitrogen, phenols, volatile fatty acids, cyanides et cetera in foods, beverages, feed, water, land, mud, sediments, chemical products et cetera.

Usually in such apparatuses, condensation is obtained by using a glass condenser. Such glass condensers include a cooling-fluid circulation covering in which there is a coil for circulation of vapors to be condensed and the whole is made in a single piece.

Glass is chosen for its chemically neutral behavior that avoids pollution of the substances subjected to analysis but the thermal efficiency is rather low because of the poor heat exchange characteristics of the glass. This is compensated for with a high circulation of the cooling fluid which is usually water taken from the water mains This involves high water consumption by the analysis laboratories. In addition, in countries with particularly hot climates, the mains water often has a temperature too high for direct use in correct condensation and it is necessary to refrigerate it in advance with additional costs. The realization of exchangers having better thermal efficiency would require the use of metal coils but that has always been considered impossible since the use of metal in the condenser is considered an unacceptable source of pollution for the correctness of the analysis.

The document US6293335 discloses a heat exchanger for thermal conditioning of one fluid medium by heat transfer with a second fluid medium in a heat transfer tube.

The general purpose of this invention is to remedy the above mentioned shortcomings by making available a laboratory-equipment condenser having high efficiency but that would not alter the results of the laboratory analysis.

In view of this purpose it was sought to provide in accordance with this invention a vapor condenser according to claim 1.

To clarify the explanation of the innovative principles of this invention and its advantages compared with the prior art there is described below with the aid of the single annexed drawing a possible embodiment thereof by way of non-limiting example applying said principles.

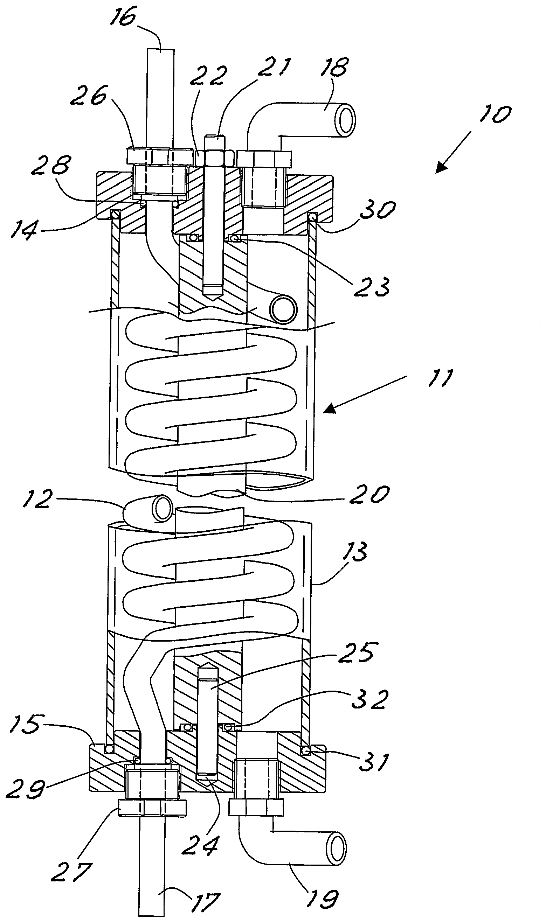

With reference to the figure, there is shown diagrammatically a partially cross-sectioned condenser for laboratory chemical analysis equipment designated as a whole by reference number 10. The device is suited to condensation of vapors and is usable in equipment such as distillers in vapor current for chemical analysis, for example for determination of ammoniacal nitrogen, proteinous nitrogen, nitric nitrogen, phenols, volatile fatty acids, cyanides et cetera in foodstuffs, beverages, feed, water, soil, mud, sediments, chemical products et cetera.

The condenser includes an outer case of plastic material 11 containing a coil 12 for circulation of the fluid to be condensed and is realized in the form of a piece of cylindrical pipe 13 at the two ends of which are fitted sealed-closing plugs 14, 15 traversed by ducts 16, 17 for connection of the circuit of fluid to be condensed with the coil and connectors 18, 19 for connection with the interior of the container for circulation of the cooling fluid and in particular water. For hydraulic seal against the walls of the pipe, there are provided annular seals 30, 31 housed in a recess in the respective plug.

The container is made openable for extraction of the coil and the coil is made of titanium or titanium alloy. It was found that the use of titanium for the coil allows realization of an absolutely neutral condenser as concerns contamination of the analyses. At the same time, the titanium allows having very high efficiency of the exchanger. The container on the other hand is made of advantageously transparent plastic material to allow detecting the formation of deposits in it. The ease of disassembly of the container and extraction of the coil allows cleaning without the use of aggressive acids on the plastic parts. Keeping the surface clean is indispensable for optimization of thermal exchange.

To have perfect contact between the fluid to be condensed and the cooling fluid through the coil walls, to further strengthen the efficiency of the physical heat exchange phenomenon and, not last, to have a strong structure, it was found advantageous to realize the container with an axial shaft 20 in it for removable interconnection of the two plugs to keep them in place at the ends of the piece of pipe. The coil winds around the shaft in the air space between the latter and the container. At least at one end the shaft 20 has a threaded pin 21 that projects through the corresponding plug and on which is screwed a plug-locking nut 22 allowing fast disassembly thereof. To avoid leaking toward the outside between the ends of the shaft and the plug there is a seal 23. In the advantageous embodiment shown, only one plug has a through pin and nut while the other has a closed threaded seat 24 that receives a threaded pin 25 for fastening the shaft. A seal 32 can also be provided to avoid infiltration of water on the metal pin.

The coil has rectilinear ends parallel to the axis of the cylindrical pipe so that they can slip into and out of the corresponding sealed passages in the respective plug to realize the connecting ducts external to the input and output circuits of the fluid to be condensed. Advantageously, to ensure the hydraulic seal of the container, the ends of the coil traverse the respective plug opposite a ring-nut 26, 27 compressing a seal 28, 29 around the pipe and received in the flange.

It is now clear that the preset purposes have been achieved. The condenser has high efficiency thanks to the coil of metallic material having good thermal conductivity. In addition, the use of titanium was found optimal for avoiding pollution of the measurements while the use of other metals, for example stainless steel, was found absolutely unsuitable. In fact, a contamination of the laboratory analysis was found.

The disassemblable container also allows easy accessibility to the interior of the exchanger for cleaning. This way, the use of cleaning liquids made with aggressive acids placed in forced circulation in the condenser can be avoided as is otherwise necessary with glass monobloc condensers. This also allows use of plastic to realize the container.

Distilling apparatuses made with the exchanger described here have an efficiency such that water consumption is considerably reduced even more than by a factor of ten. In addition, even in hot climates, refrigeration of the water before inlet to the condenser is no longer necessary.

## Claims

1. Vapor condenser for use in a laboratory chemical-analysis distiller for condensation of vapors into vapor current, including an outer container (11) containing a coil (12) for circulation of a fluid to be condensed and two connectors (18, 19) for connection with the interior of the container (11) for circulation of cooling liquid and **characterized in that** the container (11) is made openable for extraction of the coil and the coil is made of titanium or titanium alloy, **in that** the container is made of plastic material in the form of a piece of cylindrical pipe (13) at the two ends of which are fitted sealed-closing plugs (14,15) each traversed by one duct of two ducts (16,17) and one connector of the two connectors (18,19) for connection with the coil and with the interior of the container respectively, **in that** axially with the container there is a shaft (20) for removable interconnection of the two plugs, with the coil winding around the shaft, **in that** at least at one end the shaft has a threaded pin (21) projecting through the corresponding plug and on which is screwed a nut (22) for locking the plug, between the end of the shaft and the corresponding plug there being a seal (23), and **in that** the coil has straight ends directed parallel to the axis of the cylindrical pipe and traversing the respective plug sealed in an out-slippable manner to realize the ducts for connection to the coil.

2. Condenser in accordance with claim 1 **characterized in that** the ends of the coil traverse the respective plug opposite a ring-nut (26,27) compressing a seal (28,29) around the pipe and received in the plug.

## Patentansprüche

1. Dampfkondensator zur Verwendung in einem Labor-Destilliergerät zu chemische Analyse zur Kondensation von Dämpfen in Dampfströme, einschließlich eines äußeren Behälters (11), der eine Spule (12) zur Zirkulation eines zu kondensierenden Fluids und zwei Verbinder (18, 19) zur Verbindung mit dem Inneren des Behälters (11) zur Zirkulation von Kühlflüssigkeit umfasst und **gekennzeichnet ist dadurch**, dass der Behälter (11) zur Herausnahme der Spule öffenbar ist und dass die Spule aus Titan oder einer Titanlegierung besteht, dass der Behälter aus Kunststoffmaterial in Form eines Stück eines zylindrischen Rohrs (13) besteht, an dessen beiden Enden abgedichtete Verschlussstopfen (14,15) angepasst sind, die jeweils von einer der zwei Leitungen (16,17) und einem der zwei Verbinders (18,19) zur Verbindung mit der Spule bzw. mit dem Inneren des Behälters durchquert werden, dass axial mit dem Behälter ein Schaft (20) zur lösbaren Verbindung der zwei Stopfen vorgesehen ist, worin sich die Spule um den Schaft windet, dass der Schaft an mindestes einem Ende ein mit einem Gewinde versehenen Stift (21) aufweist, der **durch** den entsprechenden Stopfen durchsteht und auf den eine Mutter (22) geschraubt ist, um den Stopfen zu sperren, worin zwischen dem Ende der Welle und dem entsprechenden Stopfen eine Dichtung (23) vorhanden ist, und dass die Spule gerade Enden aufweist, die parallel zu der Achse des zylindrischen Rohrs gerichtet sind und den jeweiligen Stopfen abgedichtet in einer nach außen gleitenden Art und Weise durchqueren, um die Leitungen zur Verbindung mit der Spule zu realisieren.

2. Kondensator nach Anspruch 1, **dadurch gekennzeichnet, dass** die Enden der Spule den jeweiligen Stopfen abgewandt von einer Ring-Mutter (26,27) durchqueren und eine Dichtung (28,29) um das Rohr und in dem Stopfen aufgenommen komprimieren.

## Revendications

1. Condensateur de vapeur destiné à être utilisé dans un distillateur d'analyses chimiques de laboratoire pour la condensation des vapeurs en courant de vapeur, comprenant un contenant externe (11) contenant un serpentin (12) pour la circulation d'un fluide à condenser et deux connecteurs (18, 19) pour le raccordement avec l'intérieur du contenant (11) pour la circulation du liquide de refroidissement et **caractérisé en ce que** le contenant (11) peut être ouvert pour l'extraction du serpentin et le serpentin est réalisé à partir de titane ou d'alliage de titane, **en ce que** le contenant est réalisé à partir de matière plastique se présentant sous la forme d'un pièce de tuyau cylindrique (13) au niveau des deux extrémités duquel sont montés des bouchons de fermeture hermétiques (14, 15), chacun traversé par un conduit de deux conduits (16, 17) et un connecteur des deux connecteurs (18, 19) pour le raccordement avec le serpentin et avec l'intérieur du contenant respectivement, **en ce que**, axialement par rapport au contenant, on trouve un arbre (20) pour l'interconnexion amovible des deux bouchons, avec le serpentin qui s'enroule autour de l'arbre, **en ce qu'**au moins à une extrémité, l'arbre a une broche filetée (21) faisant saillie à travers le bouchon correspondant et sur laquelle est vissé un écrou (22) pour verrouiller le bouchon, entre l'extrémité de l'arbre et le bouchon correspondant, on trouve un joint d'étanchéité (23), et **en ce que** le serpentin a des extrémités droites dirigées parallèlement à l'axe du tuyau cylindre et traversant le bouchon respectif scellé d'une manière non glissante pour réaliser les conduits pour le raccordement au serpentin.

2. Condensateur selon la revendication 1, **caractérisé en ce que** les extrémités du serpentin traversent le bouchon respectif opposé à un écrou annulaire (26, 27) comprimant un joint d'étanchéité (28, 29) autour du tuyau et reçu dans le bouchon.
